# EUROPEAN PATENT APPLICATION

(11) **EP 2 193 835 A1**
(43) Date of publication of application: **09.06.2010**
(21) Application number: 09177693.0
(22) Date of filing: 02.12.2009
(51) Int. Cl.: B01D 67/00, B01D 71/26

(54) **Methods for making an asymmetric composite membrane**

(30) Priority: 05.12.2008 US 329435
(71) Applicant: General Electric Company, Schenectady, NY 12345 (US)
(72) Inventor: Hutchinson, Ryan Austin, Albany, NY 12203 (US); Duong, Hieu Minh, Rosemead, CA 91770 (US); Tamaki, Ryo, Valencia, CA 91355 (US)
(74) Representative: Szary, Anne Catherine

(57) **Abstract**

A process for forming an asymmetric membrane comprises applying a polymer comprising electron beam reactive groups onto a porous base membrane to form a coating; irradiating the coated porous base membrane with a high energy source; and permanently grafting the electron beam reactive groups to the porous base membrane to form a coating that fills the pores of the membrane.

## Description

### FIELD OF THE INVENTION

The invention includes embodiments that relate to a membrane. More particularly, the invention includes embodiments that relate to an asymmetric composite membrane.

### BACKGROUND OF THE INVENTION

Cross-linked polyethylene oxide membrane systems have been reported to be highly effective in hydrogen gas purification by selectively removing acid gases, such as carbon dioxide and hydrogen sulfide, from mixed gas feed streams. While the selectivity performance of polyethylene oxide membranes is high, its flux is low at ambient operating conditions. The low permeability of the membrane is due to its relatively high thickness. It is therefore desirable to have a membrane that exhibits high flux and enhanced mechanical integrity, while maintaining good selectivity.

### BRIEF SUMMARY OF THE INVENTION

In one embodiment, a process for forming an asymmetric membrane comprises applying a polymer comprising electron beam reactive groups onto a porous base membrane to form a coating; irradiating the coated porous base membrane with a high energy source; and permanently grafting the electron beam reactive groups to the porous base membrane to form a coating that fills the pores of the membrane.

In another embodiment, a process for forming an asymmetric membrane comprises applying a polymer comprising electron beam reactive groups onto a porous base membrane to form a coating, wherein the polymer comprises polyethylene oxide or a derivative thereof, and wherein the porous base membrane comprises expanded polytetrafluoroethylene; irradiating the coated porous base membrane with a high energy source; and permanently grafting the electron beam reactive groups to the porous base membrane to form a coating that fills the pores of the membrane.

### DETAILED DESCRIPTION OF THE INVENTION

Disclosed herein are polymeric materials comprising electron beam reactive groups that are coated onto a base membrane and subsequently irradiated with electron beam to form a permanently coated asymmetric membrane.

As used herein, a base membrane may refer to an uncoated membrane, while the more general term of membrane may refer to a membrane that comprises an embodiment of the disclosure, unless language or context indicates otherwise. Various materials can be used for forming the base membrane including fluoropolymers, sulfones, polypropylene, polyvinylidene fluoride, or nylon. Suitable fluoropolymers include, without limitation, expanded polytetrafluoroethylene (ePTFE), polyvinylidene difluoride (PVDF), poly(tetrafluoroethylene-co-hexafluoropropylene (FEP), poly(ethylene-alt-tetrafluoroethylene) (ETFE), polychlorotrifluoroethylene (PCTFE), poly(tetrafluoroethylene-co-perfluoropropyl vinyl ether) (PFA), poly(vinylidene fluoride-co-hexafluoropropylene (PVDF-co-HFP), and polyvinyl fluoride (PVF). Other materials and methods that can be used to form the membrane having an open pore structure include one or more of polyolefins (e.g., polyethylene, polypropylene, polymethylpentene, polystyrene, substituted polystyrenes, poly(vinyl chloride) (PVC), polyacrylonitriles), polyamide, polyester, polysulfone, polyether, acrylic and methacrylic polymers (e.g., polymethacrylate), polystyrene, polyurethane, polycarbonates, polyesters (e.g., polyethylene terephthalic ester, polybutylene terephthalic ester), polyether sulfones, polypropylene, polyethylene, polyphenylene sulfone, cellulosic polymer, polyphenylene oxide, polyamides (e.g., nylon, polyphenylene terephthalamide) and combinations of two or more thereof. In a preferred embodiment, the base membrane comprises expanded polytetrafluoroethylene.

Fluoropolymers, such as ePTFE, are mechanically robust, high temperature, and chemically inert materials. These advantageous properties are derived from the high strength of the carbon-fluorine bond, which mitigates chemical degradation. Even though the carbon-fluorine bond dissociation energy is one of the strongest known, the Gibbs free energy values for radical formation on fluorocarbons are similar to those of carbon-hydrogen bonds. As a result, high-energy radiation grafting of the functionalized polyethylene oxide derivatives onto the fluoropolymers base membranes by electron beam irradiation is possible.

The base membrane may be rendered permeable by, for example, one or more of perforating, stretching, expanding, bubbling, or extracting the base membrane. Suitable methods of making the membrane also may include foaming, skiving or casting any of the suitable materials. In alternate embodiments, the membrane may be formed from woven or non-woven fibers.

In one embodiment, continuous pores may be produced. Suitable porosity may be in a range of greater than about 10 percent by volume. In one embodiment, the porosity may be in a range of from about 10 percent to about 20 percent, from about 20 percent to about 30 percent, from about 30 percent to about 40 percent, from about 40 percent to about 50 percent, from about 50 percent to about 60 percent, from about 60 percent to about 70 percent, from about 70 percent to about 80 percent, from about 80 percent to about 90 percent, or greater than about 90 percent by volume.

Pore diameter may be uniform from pore to pore, and the pores may define a predetermined pattern. Alternatively, the pore diameter may differ from pore to pore, and the pores may define an irregular pattern. Suitable pore diameters may be less than about 100 micrometers. In one embodiment, an average pore diameter may be in a range of from about 1 micrometer to about 20 micrometers, from about 20 micrometers to about 40 micrometers, from about 40 micrometers to about 60 micrometers, from about 60 micrometers to about 80 micrometers, or from about 80 micrometers to about 100 micrometers. In one embodiment, the average pore diameter may be less than about 0.1 micrometer, in a range of from about 0.01 micrometer to about 0.1 micrometer, from about 0.1 micrometer to about 0.25 micrometer, from about 0.25 micrometer to about 0.5 micrometer, or less than about 1 micrometer.

In one embodiment, the base membrane may be a three-dimensional matrix or have a lattice type structure including a plurality of nodes interconnected by a plurality of fibrils. Surfaces of the nodes and fibrils may define a plurality of pores in the membrane. The size of a fibril that has been at least partially sintered may be in a range of from about 0.05 micrometers to about 0.5 micrometers in diameter taken in a direction normal to the longitudinal extent of the fibril. The specific surface area of the porous membrane may be in a range of from about 0.5 square meters per gram of membrane material to about 110 square meters per gram of membrane material.

Surfaces of nodes and fibrils may define numerous interconnecting pores that extend through the membrane between opposite major side surfaces in a tortuous path. In one embodiment, the average effective pore size of pores in the membrane may be in the micrometer range. A suitable average effective pore size for pores in the membrane may be in a range of from about 0.01 micrometers to about 0.1 micrometers, from about 0.1 micrometers to about 5 microns, from about 5 micrometers to about 10 micrometers, or greater than about 10 micrometers.

In one embodiment, the base membrane may be made by extruding a mixture of fine powder particles and lubricant. The extrudate subsequently may be calendared. The calendared extrudate may be "expanded" or stretched in one or more directions, to form fibrils connecting nodes to define a three-dimensional matrix or lattice type of structure. "Expanded" means stretched beyond the elastic limit of the material to introduce permanent set or elongation to fibrils. The membrane may be heated or "sintered" to reduce and minimize residual stress in the membrane material by changing portions of the material from a crystalline state to an amorphous state. In one embodiment, the membrane may be unsintered or partially sintered as is appropriate for the contemplated end use of the membrane.

In one embodiment, the base membrane may define many interconnected pores that fluidly communicate with environments adjacent to the opposite facing major sides of the membrane. The propensity of the material of the membrane to permit a liquid material, for example, an aqueous polar liquid, to wet out and pass through pores may be expressed as a function of one or more properties. The properties may include the surface energy of the membrane, the surface tension of the liquid material, the relative contact angle between the material of the membrane and the liquid material, the size or effective flow area of pores, and the compatibility of the material of the membrane and the liquid material.

The base membrane is coated with a polymer comprising electron beam reactive groups to form a coating. The polymer may be derivatized with the electron beam reactive groups. In a preferred embodiment, the polymer comprises polyethylene oxide or a derivative thereof. Suitable derivatives of polyethylene oxide include, without limitation poly(ethylene glycol) acrylate, poly(ethylene glycol) methacrylate, poly(ethylene glycol) diacrylate, poly(ethylene glycol) methyl ether acrylate, or a combination thereof.

The coating may comprise from about 0.1 weight percent to about 20 weight percent of the polymer. In one embodiment, the coating comprises from about 20 weight percent to about 40 weight percent of the polymer. In one embodiment, the coating comprises from about 40 weight percent to about 60 weight percent of the polymer. In another embodiment, the coating comprises from about 60 weight percent to about 80 weight percent of the polymer. In yet another embodiment, the coating comprises from about 80 weight percent to about 100 weight percent of the polymer.

Weight percent add-on or burn-off weight percents can be calculated to determine the amount of e-beam reactive coating applied to the base membrane. In one embodiment, the membrane has a weight percent add-on and/or burn-off weight percent of the coating from 0.5 to 100 weight percent. In another embodiment, the membrane has a weight percent add-on and/or burn-off weight percent of the coating from 3 to 15 weight percent.

Any e-beam reactive group that can be attached via a covalent linkage to polyethylene or the coating materials described above can be used in the present disclosure. An e-beam reactive group is defined as a moiety that can form a radical under high-energy irradiation. An e-beam reactive group generates free radicals on exposure to an electron beam source and facilitates crosslinking and grafting to other reactive substrates. The reagents that can be attached covalently to polyethylene or other coating materials may be monomers, oligomers, or polymers, or a combination of the above. In one embodiment, the e-beam reactive functional group comprises methacrylates and/or acrylates. In another embodiment, the e-beam reactive functional group comprises primary, secondary or tertiary aliphatic or cycloaliphatic radicals. In another alternate embodiment, the e-beam reactive functional group comprises aromatic radicals, e.g., benzyl radicals. Other e-beam reactive functionalities include acrylamides, vinylketones, styrenics, vinyl ethers, vinyl- or allyl- containing reagents, benzyl radicals, and tertiary-carbon (CHR3) based materials.

Suitable methacrylates, acrylates, and vinyl ketone reagents that can be covalently bound to the coating include, without limitation, acryloyl chloride, (2E)-2-butenoyl chloride, maleic anhydride, 2(5H)-furanone, methyl acrylate, 5,6-dihydro-2H-pyran-2-one, ethyl acrylate, methyl crotonate, allyl acrylate, vinyl crotonate, 2-isocyanatoethyl methacrylate, methacrylic acid, methacrylic anhydride, methacryloyl chloride, glycidyl methacrylate, 2-ethylacryloyl chloride, 3-methylenedihydro-2(3H)-furanone, 3-methyl-2(5H)-furanone, methyl 2-methylacrylate, methyl trans-2-methoxyacrylate, citraconic anhydride, itaconic anhydride, methyl (2E)-2-methyl-2-butenoate, ethyl 2-methylacrylate, ethyl 2-cyanoacrylate, dimethylmaleic anhydride, allyl 2-methylacrylate, ethyl (2E)-2-methyl-2-butenoate, ethyl 2-ethylacrylate, methyl (2E)-2-methyl-2-pentenoate, 2-hydroxyethyl 2-methylacrylate, methyl 2-(1-hydroxyethyl)acrylate, [3-(methacryloyloxy)propyl]trimethoxysilane, 3-(diethoxymethylsilyl)propyl methacrylate, 3-(trichlorosilyl)propyl 2-methylacrylate, 3-(trimethoxysilyl)propyl 2-methylacrylate , 3-[tris(trimethylsiloxy)silyl]propyl methacrylate, 6-dihydro-1H-cyclopenta[c]furan-1,3(4H)-dione, methyl 2-cyano-3-methylcrotonate, trans-2,3-dimethylacrylic acid, N-(hydroxymethyl)acrylamide, and the like.

Suitable vinyl and allyl e-beam active reagents include, without limitation, allyl bromide, allyl chloride, diketene, 5-methylenedihydro-2(3H)-furanone, 3-methylenedihydro-2(3H)-furanone, 2-chloroethyl vinyl ether, 4-methoxy-2(5H)-furanone, and the like.

Suitable isocyanate e-beam active reagents include, without limitation, vinyl isocyanate, allyl isocyanate, furfuryl isocyanate, 1-ethyl-4-isocyanatobenzene, 1-ethyl-3-isocyanatobenzene, 1-(isocyanatomethyl)-3-methylbenzene, 1-isocyanato-3,5-dimethylbenzene, 1-bromo-2-isocyanatoethane, (2-isocyanatoethyl)benzene, 1-(isocyanatomethyl)-4-methylbenzene, 1-(isocyanatomethyl)-3-methylbenzene, 1-(isocyanatomethyl)-2-methylbenzene, and the like.

Suitable styrenic e-beam active reagents include, without limitation, 3-vinylbenzaldehyde, 4-vinylbenzaldehyde, 4-vinylbenzyl chloride, trans-cinnamoyl chloride, phenylmaleic anhydride, 4-hydroxy-3-phenyl-2(5H)-furanone, and the like.

Suitable epoxide e-beam active reagents include, without limitation, glycidyl methacrylate, glycidyl vinyl ether, 2-(3-butenyl)oxirane, 3-vinyl-7-oxabicyclo[4.1.0]heptane, limonene oxide, and the like.

The process for making an asymmetric membrane generally includes coating a porous base membrane with polyethylene oxide and/or derivatives thereof which contain e-beam reactive groups; drying the membrane under controlled conditions, and then irradiating the composite with an electron beam at a dose between 0.1 and 2000 kilograys (kGy) in one embodiment, between 1 and 60 kGy in another embodiment, and between preferably 5 and 40 kGy in still another embodiment.

In some embodiments, the base membrane is fully wetted during coating to ensure uniform coating deposition of the polymer containing the e-beam reactive groups. Coating of the hydrophilic polymer is not intended to be limited to any particular process and may be deposited by solution deposition, high pressure solution deposition, vacuum filtration, painting, gravure coating, air brushing, and the like. In this manner, the polymer can be dissolved in a polar aprotic and/or polar protic solvents. For example, the polymer can be dissolved in water or an appropriate polar aprotic solvent and subsequently mixed with isopropyl alcohol.

Drying is generally at a temperature effective to remove the solvent and can be a temperature of about room temperature to about 150 degrees Celsius. The coating can be vacuum dried or air dried depending on the application. Spraying and/or soaking the composite material can be used to accomplish rewetting. Subsequent irradiation with e-beam can be done when dry or wet depending on the application.

Membranes according to embodiments of the disclosure may have differing dimensions, some selected with reference to application-specific criteria. In one embodiment, the membrane may have a thickness in the direction of fluid flow in a range of less than about 1 micrometer. For example, the membrane may have a thickness in the direction of fluid flow in a range of 50 nanometers to about 1 micrometer, and in one embodiment from about 1 micrometer to about 10 micrometers. In yet other embodiments, the membrane may have a thickness in the direction of fluid flow in a range of from about 10 micrometers to about 100 micrometers, from about 100 micrometers to about 1 millimeter, from about 1 millimeter to about 5 millimeters, or greater than about 5 millimeters. In one embodiment, the membrane may be formed from a plurality of differing layers.

Perpendicular to the direction of fluid flow, the membrane may have a width of greater than about 10 millimeters. In one embodiment, the membrane may have a width in a range of from about 10 millimeters to about 45 millimeters, from about 45 millimeters to about 50 millimeters, from about 50 millimeters to about 10 centimeters, from about 10 centimeters to about 100 centimeters, from about 100 centimeters to about 500 centimeters, from about 500 centimeters to about 1 meter, or greater than about 1 meter. The width may be a diameter of a circular area, or may be the distance to the nearest peripheral edge of a polygonal area. In one embodiment, the membrane may be rectangular, having a width in the meter range and an indeterminate length. That is, the membrane may be formed into a roll with the length determined by cutting the membrane at predetermined distances during a continuous formation operation.

A membrane prepared according to embodiments of the disclosure may have one or more predetermined properties. Such properties may include one or more of a wettability of a dry-shipped membrane, a wet/dry cycling ability, filtering of polar liquid or solution, flow of non-aqueous liquid or solution, flow and/or permanence under low pH conditions, flow and/or permanence under high pH conditions, flow and/or permanence at room temperature conditions, flow and/or permanence at elevated temperature conditions, flow and/or permanence at elevated pressures, transparency to energy of predetermined wavelengths, transparency to acoustic energy, or support for catalytic material. Permanence further refers to the ability of the coating material to maintain function in a continuing manner, for example, for more than 1 day or more than one cycle (wet/dry, hot/cold, high/low pH, and the like).

Resistance of the membrane to ultraviolet (UV) radiation may allow for sterilization of the membrane, in one embodiment, without loss of properties. Of note is an alternative embodiment in which crosslinking of the coating composition may be initiated or facilitated by exposure to an irradiation source, such as an ultraviolet source, where UV initiators may compete with UV absorbing compositions, if present.

Flow rate of fluid through the membrane may be dependent on one or more factors. The factors may include one or more of the physical and/or chemical properties of the membrane, the properties of the fluid (e.g., viscosity, pH, solute, and the like), and environmental properties (e.g., temperature, pressure, and the like), etc. In one embodiment, the membrane may be permeable to vapor rather than, or in addition to, fluid or liquid. A suitable vapor transmission rate, where present, may be in a range of less than about 1000 grams per square meter per day (g/m2/day), from about 1000 g/m2/day to about 1500 g/m2/day, from about 1500 g/m2/day to about 2000 g/m2/day, or greater than about 2000 g/m2/day. In one embodiment, the membrane may be selectively impermeable to liquid or fluid, while remaining permeable to vapor.

The following examples are intended only to illustrate methods and embodiments in accordance with the invention and as such should not be construed as imposing limitations upon the claims.

### EXAMPLES

### Example 1

Poly(ethylene glycol) methyl ether acrylate is dissolved at about 65 percent by weight in isopropyl alcohol to form a solution. Expanded poly(tetrafluoroethylene) is coated with the solution, with the excess solution being removed by squeegee. The membrane is dried at room temperature and atmospheric pressure. The membrane is then passed under an electron beam with a nitrogen purge at atmospheric pressure. The acceleration voltage of the electron beam is 80 kV, and the dose is 100 kGy.

All ranges disclosed herein are inclusive of the endpoints, and the endpoints are combinable with each other. The terms "first," "second," and the like as used herein do not denote any order, quantity, or importance, but rather are used to distinguish one element from another. The modifiers "about" and "approximately" used in connection with a quantity are inclusive of the stated value and have the meaning dictated by the context (e.g., includes the degree of error associated with measurement of the particular quantity). The use of the terms "a" and "an" and "the" and similar referents in the context of describing the invention (especially in the context of the following claims) are to be construed to cover both the singular and the plural, unless otherwise indicated herein or clearly contradicted by context.

While the invention has been described in detail in connection with a number of embodiments, the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A process for forming an asymmetric membrane, the process comprising:
applying a polymer comprising electron beam reactive groups onto a porous base membrane to form a coating;
irradiating the coated porous base membrane with a high energy source; and
permanently grafting the electron beam reactive groups to the porous base membrane to form a coating that fills the pores of the membrane.

2. The process of claim 1, wherein irradiating the coated porous membrane with the high energy source generates radicals about the porous base membrane and the electron beam reactive groups.

3. The process of claim 1 or claim 2, wherein the porous base membrane comprises polyethylene, polyolefin, polyamide, polyester, polysulfone, polyether, polyacrylate, polymethacrylate, polystyrene, polyurethane, polypropylene, polyphenylene sulfone, polyphenylene oxide, or cellulosic polymer, or a combination of two or more thereof.

4. The process of any preceding claim, wherein the porous base membrane comprises polyvinylidene difluoride, poly(tetrafluoroethylene-cohexafluoropropylene, poly(ethylene-alt-tetrafluoroethylene), polychlorotrifluoroethylene, poly(tetrafluoroethylene-co-perfluoropropyl vinyl ether), poly(vinylidene fluoride-co-hexafluoropropylene, polyvinyl fluoride, polytetrafluoroethylene, or a combination of two or more thereof.

5. The process of any preceding claim, wherein the polymer comprises polyethylene oxide or a derivative thereof.

6. The process of claim 5, wherein the polymer comprises poly(ethylene glycol) methacrylate, poly(ethylene glycol) diacrylate, poly(ethylene glycol) methyl ether acrylate or a combination thereof.

7. The process of any preceding claim, wherein the electron beam reactive groups comprise a methacrylate, acrylate, acrylamide, vinyl ketone, styrenic, vinyl ether, vinyl-containing reagent, allyl-containing reagent, benzyl radical, tertiary-carbon based material, or a combination thereof.

8. The process of any preceding claim, wherein irradiating the coated porous base membrane with the high energy source comprises exposing the coated porous base membrane to an electron beam at a dosage rate within a range of 0.1 kGy to 2000 kGy.

9. The process of any preceding claim, further comprising:
dissolving the polymer in a solvent or solvent mixture prior to applying the polymer to the porous base membrane.

10. The process of claim 9, wherein the solvent is an alcohol.

11. The process of any preceding claim, wherein the coating comprises between about 0.1 weight percent to about 100 weight percent of the polymer.

12. The process of any preceding claim, wherein irradiating the coated porous base membrane with the high energy source comprises an additive process comprised of multiple exposures of the coated membrane to the high energy source.

13. The process of any preceding claim, wherein irradiating the coated porous base membrane with the high energy source comprises exposing one side of the coated porous base membrane to the high energy source, or exposing each side of the coated porous base membrane to the high energy source.

14. The process of any preceding claim, wherein the coated porous base membrane, subsequent to irradiation has an average thickness in a range of from about 50 nanometers to about 5 millimeters.

15. The process of any preceding claim, further comprising:
drying the coated porous base membrane prior to irradiation.
